# EUROPEAN PATENT APPLICATION

(11) **EP 1 942 486 A2**
(43) Date of publication of application: **09.07.2008**
(21) Application number: 07124118.6
(22) Date of filing: 28.12.2007
(51) Int. Cl.: G09G 5/00

(54) **Display apparatus for displaying video input through various connectors**

(30) Priority: 05.01.2007 KR 20070001614
(71) Applicant: Samsung Electronics Co., Ltd., Suwon-si, Gyeonggi-do 442-743 (KR)
(72) Inventor: CHOI, Chang-ik 353-1603, Sibeom Daeun-maeul, Hwaseong-si Gyeonggi-do (KR)
(74) Representative: Land, Addick Adrianus Gosling

(57) **Abstract**

A display apparatus is provided which diplays video received through various types of connectors. The display apparatus includes a first connector which receives first, video signal; a second connector which receives a second video signal; and a display panel which displays video corresponding to one of the first video signal and second video signal, wherein the first video signal is imput from an outside source via two or fewer pins included in the first connector, and the second video signal is input from an outside source via three or more pins included in the second connector.

## Description

### BACKGROUND OF THE INVENTION

### 1. Field of the Invention

Apparatuses and methods consistent with the present invention relate to displaying video, and more particularly, to displaying video input from an external apparatus to provide a user with the video.

### 2. Description of the Related Art

Monitors are representative of display apparatuses, and may be used to display video transferred from personal computers (PCs).

Monitors typically include digital visual interface (DVI) connectors and/or D-sub connectors in order to receive video from PCs. Accordingly, in order to transfer video from PCs to monitors, PCs also include DVI connectors or D-sub connectors.

The number of DVI connectors and D-sub connectors in PCs are limited, so the number of monitors which may be connected to PCs is also limited. Therefore, if a user desires to connect a number of monitors greater than the number of DVI connectors and D-sub connectors to the PC, separate hardware, for example video cards, including DVI connectors or D-sub connectors may need to be added to the PC.

Additionally, as a greater number of DVI cables and D-sub cables are connected to DVI connectors and D-sub connectors, the cost increases.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display apparatus which displays video input using any of various connectors in order to connect a plurality of monitors to a PC without needing to add separate hardware to the PC.

According to an aspect of the present invention, there is provided a display apparatus comprising a first connector which receives a first video signal, a second connector which receives a second video signal, and a display panel which displays video corresponding to one of the first video signal and second video signal. The first video signal may be input from an outside source via two or fewer pins included in the first connector, and the second video signal may be input from an outside source via three or more pins included in the second connector.

The first connector may be a universal serial bus (USB) connector, and the second connector may be one of a digital visual interface (DVI) connector and a D-sub connector.

The display apparatus may further comprise a third connector which receives a third video signal. The display panel may display video corresponding to one of the first video signal, second video signal and third video signal, and the third video signal may be input from an outside source through three or more pins included in the third connector.

The first connector may be a USB connector, the second connector may be a DVI connector, and the third connector may be a D-sub connector.

The display apparatus may further comprise a switching unit which performs switching so that the first video signal input through the first connector and the second video signal input through the second connector are selectively output; and a signal processor which performs signal processing with respect to the video signal output from the switching unit. The display panel may display video corresponding to the video signal processed by the signal processor.

According to another aspect of the present invention, there is provided a display apparatus comprising a first connector which receives a first video signal, a second connector which receives a second video signal, and a display panel which displays video corresponding to one of the first video signal and second video signal. The first connector may be a connector capable of receiving other signals in addition to the first video signal.

The first connector may be a connector capable of receiving the first video signal and at least one of an audio signal, a text signal and a control signal.

The first connector may be a connector capable of being used to transmit signals containing user commands to an external apparatus connected to the first connector.

The display apparatus may further comprise a third connector which receives a third video signal. The display panel may display video corresponding to one of the first video signal, second video signal and third video signal.

The display apparatus may further comprise a switching unit which performs switching so that the first video signal input through the first connector and the second video signal input through the second connector are selectively output; and a signal processor which performs signal processing with respect to the video signal output from the switching unit. The display panel may display video corresponding to the video signal processed by the signal processor.

According to another aspect of the present invention, there is provided a display apparatus comprising a universal serial bus (USB) connector which receives a first video signal from a personal computer (PC) via a USB cable; a connector which receives a second video signal from the PC via one of a digital visual interface (DVI) cable and a D-sub cable; and a display panel which displays video corresponding to one of the first video signal and second video signal.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram showing a monitor according to an exemplary embodiment of the present invention;

FIG. 2 is a diagram showing a DVI-I connector;

FIG. 3 is a diagram showing a USB connector;

FIG. 4 is a block diagram showing a monitor according to another exemplary embodiment of the present invention;

FIG. 5 is a diagram showing a D-sub connector;

FIG. 6 is a block diagram showing a monitor according to another exemplary embodiment of the present invention; and

FIG. 7 is a flowchart explaining a process by which the monitor shown in FIG. 6 selectively displays input video.

### DETAILED DESCRIPTION OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

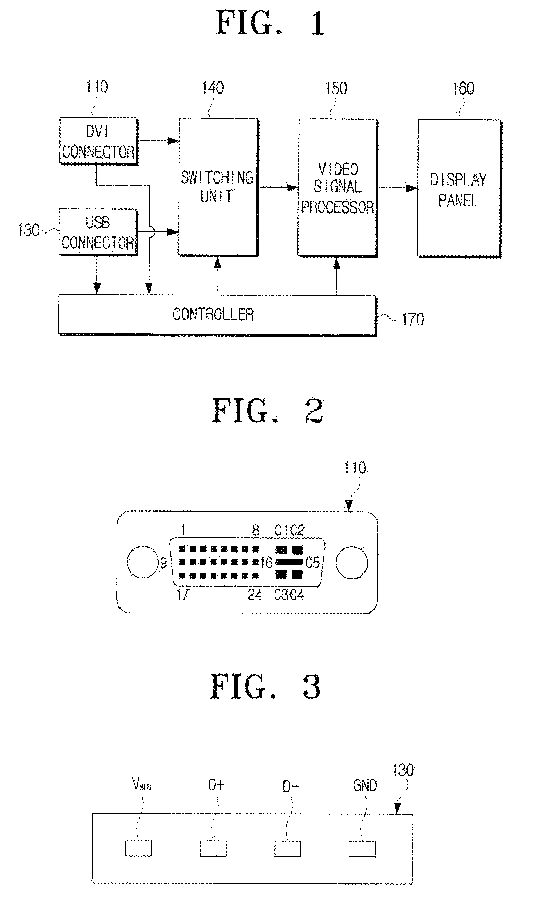

FIG. 1 is a block diagram showing a monitor according to an exemplary embodiment of the present invention. The monitor of FIG. 1 may receive video from a personal computer (PC) through various connectors, and display the received video.

As shown in FIG. 1, the monitor comprises a digital visual interface (DVI) connector 110, a universal serial bus (USB) connector 130, a switching unit 140, a video signal processor 150, a display panel 160 and a controller 170.

The DVI connector 110 is connected to the PC (not shown) via a DVI cable, and receives video signals based on the DVI standard from the PC. The DVI connector 110 comprises a plurality of pins. Among the pins, some pins are used to transfer clock signals from the PC to the monitor, other pins are used to transfer video signals and synchronizing signals from the PC to the monitor, and the remaining pins have other uses.

The DVI connector 110 is divided into a DVI-D connector to receive digital video signals and a DVI-I connector to receive not only digital video signals but also analog video signals.

FIG. 2 shows a DVI-I connector. The functions of pins included in the DVI-I connector arc shown in the following table.

| Pin | Signal Assignment | Pin | Signal Assignment | Pin | Signal Assignment |
|---|---|---|---|---|---|
| 1 | T.M.D.S. Data2- | 9 | T.M.D.S.Datal- | 17 | T.M.D.S.Data0- |
| 2 | T.M.D.S. Data2+ | 10 | T.M.D.S. Data1+ | 18 | T.M.D.S. Data0+ |
| 3 | T.M.D.S. Data2/4Shieid | 11 | T.M.D.S.Datal/3Shield | 19 | T.M.D.S. Data0/5Shield |
| 4 | T.M.D.S. Data4- | 12 | T.M.D.S. Data3- | 20 | T.M.D.S. Data5- |
| 5 | T.M.D.S. Data4+ | 13 | T.M.D.S. Data3+ | 21 | T.M.D.S. Data5+ |
| 6 | DDC Clock | 14 | +5V Power | 22 | T.M.D.S. Clock Shield |
| 7 | DDC Data | 15 | Ground (return for+5V,HSync, and Vsync) | 23 | T.M.D.S. Clock+ |
| 8 | Analog Vertical Sync | 16 | Hot Plug Detect | 24 | T.M.D.S. Clock- |
| C1 | Analog Red | C2 | Analog Green | C3 | Analog Blue |
| C4 | Analog Horizontal Sync | C5 | Analog Ground (analog R,G,&B return) | | |

Pins 1 to 5, 9 to 13 and 17 to 21 may be used to receive digital video signals via the DVI-I connector, and pins C1 to C3 are used to receive analog video signals. The DVI-D connector comprises pins 1-24, but excludes pins C1 to C5 of the DVI -I connector.

The USB connector 130 is connected to the PC via a USB cable, and receives signals based on the USB standard from the PC. The USB connector 130 may receive various types of signals other than video signals from the PC, so the USB connector 130 may be distinct from the DVI connector 110 used to receive only video signals from the PC Accordingly, the USB connector 130 may be used to receive audio signals, text signals and control signals in addition to the video signals from the PC.

Additionally, the USB connector 130 may be used to transmit signals containing user commands to the PC, but it is impossible to use the DVI connector 110 to transmit signals containing user commands to the PC. Here, user commands may be input to the monitor using a user interface such as a keyboard or a mouse connected to the monitor, or using a manipulating means disposed on the front of the monitor, and the input user command may be transmitted to the PC via the USB connector 130.

Referring to FIG. 3, the USB connector 130 comprises four pins, namely, V_{BUS}, D+, D- and GND pins. The D+ and D- pins are used to transmit and receive signals, such as video signals, synchronizing signals, audio signals, text signals, control signals and signals containing user commands, between the PC and monitor.

Additionally, the USB connector 130 may receive video signals and synchronizing signals from the PC through two pins, but the DVI connector 110 may receive video signals and synchronizing signals from the PC through three or more pins. Accordingly, the USB connector 130 also differs from the DVI connector 110.

The switching unit 140 performs switching so that the video signal input through the DVI connector 110 and the video signal input through the USB connector 130 may be selectively transmitted to the video signal processor 150. The switching operation of the switching unit 140 may be controlled by the controller 170.

The video signal processor 150 performs signal processing such as scaling or other necessary processing with respect to the video signal output from the switching unit 140.

The display panel 160 displays video corresponding to the video signal processed by the video signal processor 150 on a display, such as a liquid crystal display (LCD) or a color display tube (CDT), thereby providing a user with the video.

The controller 170 controls the entire operation of the monitor. The controller 170 may determine whether the DVI connector 110 is connected to the PC, and whether the video signal is input to the DVI connector 110 when the DVt connector 110 is connected to the PC. Additionally, the controller 170 may also determine whether the USB connector 130 is connected to the PC, and whether the video signal is input to the USB connector 130 when the USB connector 130 is connected to the Pc.

The controller 170 controls the switching of the switching unit 140 according to what connector is connected to the PC and according to a preset connector priority, so that one of the video input via the DVI connector 110 and the video input via the USB connector 130 may be displayed.

In this situation, the connector priority refers to an index indicating the display priority order of the input video when video is input through both the DVI connector 110 and the USB connector 130. Specifically, if the USB connector 130 has a higher priority than the DVI connector 110 and if video is input via both the DVI connector 110 and the USB connector 130, the video input via the USB connector 130 is displayed.

A user may select one of the video input via the DVI connector 110 and the video input via the USB connector 130 using a selection button (not shown) of the manipulating means of the monitor. In this situation, the controller 170 may control the switching of the switching unit 140 so that the video selected by the user may be displayed.

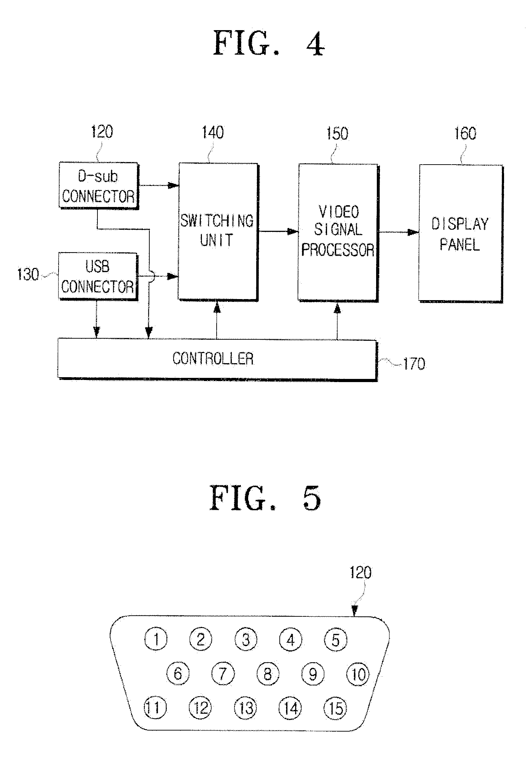

FIG. 4 is a block diagram showing a monitor according to another exemplary embodiment of the present invention. The monitor of FIG. 4 may also receive video from the PC via any of various connectors, and may display the received video.

The monitor of FIG. 4 is configured by a D-sub connector 120 instead of the DVI connector 110, and accordingly the monitor of FIG. 4 is distinct from the monitor of FIG. 1.

The D-sub connector 120 is connected to the PC (not shown) via a D-sub cable, and receives video signals based on the D-sub standard from the PC. The D-sub connector 120 also comprises a plurality of pins. Among the pins, some pins are used to transfer synchronizing signals from the PC to the monitor, other pins are used to transfer video signals from the PC to the monitor, and the remaining pins have other uses.

FIG. 5 shows the D-sub connector 120. The pins of the D-sub connector 120 have the functions shown in the following table.

| Pin | Signal Assignment | Pin | Signal Assignment | Pin | Signal Assignment |
|---|---|---|---|---|---|
| 1 | Red Video | 6 | Red Video return | 11 | Monitor ID bit 0 |
| 2 | Green Video | 7 | Green Video return | 12 | Monitor ID bit 1 |
| 3 | Blue Video | 8 | Blue Video return | 13 | Horizontal sync |
| 4 | Monitor ID bit 2 | 9 | No connection (mechanical key) | 14 | Vertical sync |
| 5 | Test (ground) | 10 | Sync return | 15 | Monitor ID bit 3 |

Pins 1 to 3 and 6 to 8 are used to receive video signals via the D-sub connector 120.

The USB connector 130 is connected to the PC via the USB cable, and receives signals based on the USB standard from the PC. The USB connector 130 may receive various types of signals other than video signals from the PC, so the USB connector 30 may be distinct from the D-sub connector 120 used to receive only video signals from the PC. Accordingly, the USB connector 130 may be used to receive audio signals, text signals and control signals in addition to the video signals from the PC.

Additionally, the USB connector 130 may be used to transmit signals containing user commands to the PC, but it is impossible to use the D-sub connector 120 to transmit signals containing user commands to the PC.

Furthermore, the USB connector 130 may receive video signals and synchronizing signals from the PC through two pins, but the D-sub connector 120 may receive video signals and synchronizing signals from the PC through three or more pins. Accordingly, the USB connector 130 also differs from the D-sub connector 120.

The switching unit 140 performs switching so that the video signal input through the D-sub connector 120 and the video signal input through the USB connector 130 may be selectively transmitted to the video signal processor 150. The switching operation of the switching unit 140 may be controlled by the controller 170,

The video signal processor 150 and display panel 160 shown in FIG. 4 are the same as those in the monitor of FIG. 1, so detailed description thereof are omitted here.

The controller 170 controls the entire operation of the monitor. The controller 170 may determine whether the D-sub connector 120 is connected to the PC, and whether the video signal is input to the D-sub connector 120 when the D-sub connector 120 is connected to the PC. Additionally, the controller 170 may also determine whether the USB connector 130 is connected to the PC, and whether the video signal is input to the USB connector 130 when the USB connector 130 is connected to the PC.

The controller 170 controls the switching of the switching unit 140 according to what connector is connected to the PC and according to the preset connector priority, so that one of the video input via the D-sub connector 120 and the video input via the USB connector 130 may be displayed.

The controller 170 of FIG. 4 performs controlling operations similarly to the controller 170 of FIG. 1, so detailed description thereof is omitted here.

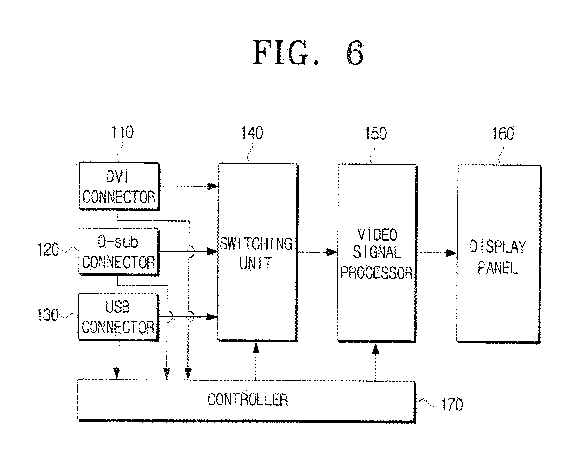

FIG. 6 is a block diagram showing a monitor according to another exemplary embodiment of the present invention. The monitor of FIG. 6 may also receive video from the PC via various connectors, and may display the received video.

The monitor of FIG. 6 comprises three types of connectors, namely, the DVI connector 110, D-sub connector 120 and USB connector 130, and thus the monitor of FIG. 6 is different from the monitors of FIGS. 1 and 4 which respectively comprise two types of connectors.

The DVI connector 110, D-sub connector 120, USB connector 130, video signal processor 150 and display panel 160 shown in FIG. 6 function as described above with reference to FIGS. 1 and 4, so detailed description thereof is omitted here.

The switching unit 140 performs switching so that one of the video signal input via the DVI connector 110, video signal input via the D-sub connector 120 and video signal input via the USB connector 130 may be selectively transferred to the video signal processor 150.

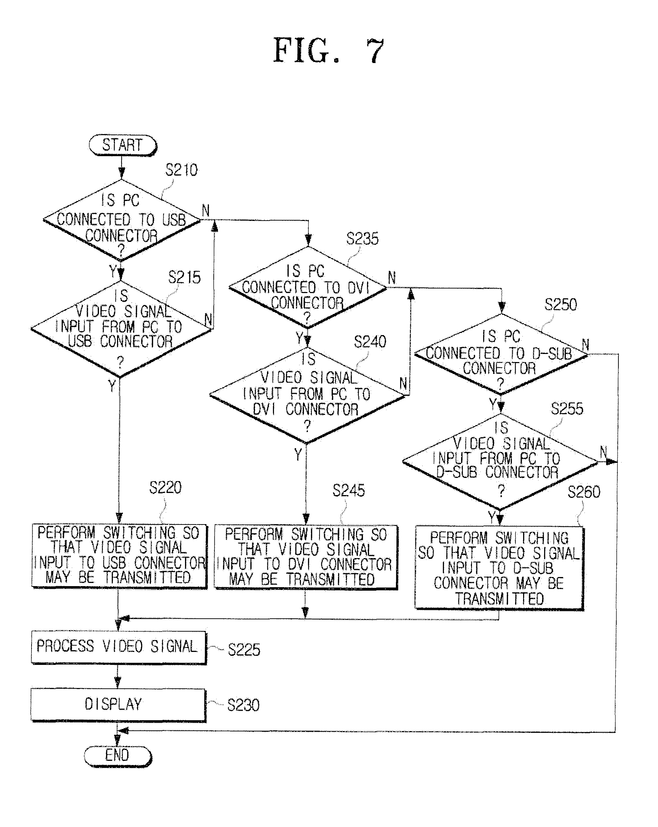

The controller 170 controls the entire operation of the monitor. Specifically, the controller 170 controls the switching of the switching unit 140, so that one of the video signal input via the DVI connector 110, video signal input via the D-sub connector 120 and video signal input via the USB connector 130 may be displayed. Hereinafter, detailed description will be given with reference to FIG. 7.

FIG. 7 is flowchart explaining a process by which the monitor shown in FIG. 6 selectively displays the video input to the connectors. In FIG. 7. the connector priority may be given in the order of the USB connector 130, the DVI connector 110 and the D-sub connector 120.

As shown in FIG. 7. the PC is connected to the USB connector 130 via the USB cable (S210-Y). If it is determined that the video signal is input from the PC to the USB connector 130 (S215-Y), the controller 170 may control the switching of the switching unit 140 so that the video signal input to the USB connector 130 may be transmitted to the video signal processor 150 (S220).

The video signal processor 150 then performs signal processing, such as scaling, with respect to the video signal output from the switching unit 140 (S225). The display panel 160 displays video corresponding to the video signal processed by the video signal processor 150 (S230).

If the PC is not connected to the USB connector 130 (S210-N), or if the video signal is not input from the PC to the USB connector 130 even when the PC is connected to the USB connector 130 (S215-N), the controller 170 may determine whether the PC is connected to the DVI connector 110 via the DVI cable (S235).

If it is determined that the PC is connected to the DVI connector 110 via the DVI cable (S235-Y) and that the video signal is input from the PC to the DVI connector 110 (S240-Y), the controller 170 may control the switching of the switching unit 140 so that the video signal input to the DVI connector 110 may be transmitted to the video signal processor 150 (S245). Operations S225 and S230 may subsequently be performed.

If the PC is not connected to the DVI connector 110 (S235-N), or if the video signal is not input from the PC to the DVI connector 110 even when the PC is connected to the DVI connector 110 (S240-N), the controller 170 may determine whether the PC is connected to the D-sub connector 120 via the D-sub cable (S250),

If it is determined that the PC is connected to the D-sub connector 120 via the D-sub cable (S250-Y) and that the video signal is input from the PC to the D-sub connector 120 (S255-Y), the controller 170 may control the switching of the switching unit 140 so that the video signal input to the D-sub connector 120 may be transmitted to the video signal processor 150 (S260). Operations S225 and S230 may subsequently be performed.

The monitors which selectively comprise the DVI connector, USB connector and D-sub connector and display one of the videos input via the connectors were described above in detail, according to the exemplary embodiments of the present invention.

Although the respective monitors selectively comprise two of the DVI connector, USB connector and D-sub connector in the exemplary embodiments of the present invention, the monitors may respectively comprise two or more DVI connectors, two or more USB connectors and two or more D-sub connectors.

The present invention may also be applied to a situation in which the monitor comprises multiple types of connectors other than the DVI connector, USB connector and D-sub connector. These multiple types of connectors may include a display port connector, which is a connector of such a type that low voltage differential signaling (LVDS) used as the original internal interface standard is integrated with the DVI used as the external connection standard to be used as a single connector, and a unified display interface (UDI) connector, which is a connector compatible with the DVI and a high-definition multimedia interface (HDMI) and capable of supporting high definition (HD) video.

Additionally, in the exemplary embodiments of the present invention, the video output from the PC is displayed in order to facilitate understanding of the present invention, but it is also possible to display video output from other external apparatuses instead of the PC.

Furthermore, the video signal processor 150 and controller 170 are separated in the monitor in the exemplary embodiments of the present invention, but the video signal processor 150 and controller 170 may be combined in a single unit.

Moreover, the switching of the switching unit 140 is controlled so that a video received via any of various types of connectors is displayed according to the exemplary embodiments of the present invention for convenience of description, but the present invention is not limited thereto. Accordingly, the video signal processor 150 may process selectively one of the videos received via various types of connectors without employing the switching unit 140.

The monitor is a kind of the display apparatus, so the present invention is applicable to other types of display apparatus instead of the monitor,

In addition, the connector priority is given in the order of the USB connector 130, the DVI connector 110 and the D-sub connector 120 in FIG. 7, but may be changed.

As described above, according to the exemplary embodiments of the present invention, video may be received from an external apparatus, such as a PC, via a DVI connector, a D-sub connector and a USB connector, and the received video may be displayed. Therefore, a number of display apparatuses greater than the number of DVI connectors and D-sub connecters may be connected to the PC without needing to add separate hardware to the PC. Additionally, it is possible to connect the PC to the display apparatus using a USB cable which is low priced due to having the number of lines less than a DVI cable or a D-sub cable.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus comprising:
a first connector which receives a first video signal;
a second connector which receives a second video signal; and
a display panel which displays video corresponding to one of the first video signal and second video signal,
wherein the first video signal is input from a first outside source via two or fewer pins included in the first connector, and the second video signal is input from a second outside source via three or more pins included in the second connector.

2. The display apparatus as claimed in claim 1, wherein the first connector is a universal serial bus (USE) connector, and the second connector is one of a digital visual interface (DVI) connector and a D-sub connector.

3. The display apparatus as claimed in claim 1, wherein the first video signal is generated in a universal serial bus (USB) format.

4. The display apparatus as claimed in claim 1, further comprising at least one of a display port connector, a unified display interface connector and a high-definition multimedia interface.

5. The display apparatus as claimed in claim 1, further comprising a third connector which receives a third video signal,
wherein the display panel displays video corresponding to one of the first video signal, second video signal and third video signal, and the third video signal is input from a third outside source through three or more pins included in the third connector.

6. The display apparatus as claimed in claim 5, wherein the display panel displays video determined by a connector priority, and wherein the first connector has the highest priority, the second connector has the second highest priority and the third connector has the lowest priority.

7. The display apparatus as claimed in claim 6, wherein a user may change an order of the connector priority.

8. The display apparatus as claimed in claim 5, wherein the first connector is a USE connector, the second connector is a DVI connector, and the third connector is a D-sub connector.

9. The display apparatus as claimed in claim 1, further comprising:
a switching unit which performs switching so that the first video signal input through the first connector and the second video signal input through the second connector are selectively output; and
a signal processor which performs signal processing with respect to the video signal output from the switching unit,
wherein the display panel displays video corresponding to the video signal processed by the signal processor.

10. The display apparatus as claimed in claim 9, wherein the switching unit is controlled to prioritize the first video signal input through the first connector over the second video signal input through the second connector.

11. A display apparatus comprising:
a first connector which receives a first video signal;
a second connector which receives a second video signal; and
a display panel which displays video corresponding to one of the first video signal and second video signal,
wherein the first connector is a connector operable to receive other signals in addition to the first video signal.

12. The display apparatus as claimed in claim 11, wherein the first connector is a connector operable to receive the first video signal and at least one of an audio signal, a text signal and a control signal.

13. The display apparatus as claimed in claim 11, wherein the first connector is a connector operable to be used to transmit signals containing user commands to an external apparatus connected to the first connector.

14. The display apparatus as claimed in claim 11, wherein the first video signal is generated in a universal serial bus (USB) format.

15. The display apparatus as claimed in claim 11, further comprising a third connector which receives a third video signal
wherein the display panel displays video corresponding to one of the first video signal, second video signal and third video signal.

16. The display apparatus as claimed in claim 15, wherein the display panel displays video determined by a connector priority, and wherein the first connector has the highest priority, the second connector has the second highest priority and the third connector has the lowest priority.

17. The display apparatus as claimed in claim 16, wherein a user may change an order of the connector priority.

18. The display apparatus as claimed in claim 11, further comprising:
a switching unit which performs switching so that the first video signal input through the first connector and the second video signal input through the second connector are selectively output; and
a signal processor which performs signal processing with respect to the video signal output from the switching unit,
wherein the display panel displays video corresponding to the video signal processed by the signal processor.

19. The display apparatus as claimed in claim 18, wherein the switching unit is controlled to prioritize the first video signal input through the first connector over the second video signal input through the second connector.

20. A display apparatus comprising:
a universal serial bus (USB) connector which receives a first video signal from a personal computer (PC) via a USB cable;
a connector which receives a second video signal from the PC via one of a digital visual interface (DVI) cable and a D-sub cable; and
a display panel which displays video corresponding to one of the first video signal and second video signal.

21. The display apparatus as claimed in claim 20, wherein the first video signal is generated in the USB format.
